# EUROPEAN PATENT APPLICATION

(11) **EP 1 818 182 A1**
(43) Date of publication of application: **15.08.2007**
(21) Application number: 06002781.0
(22) Date of filing: 11.02.2006
(51) Int. Cl.: B60B 1/00, B60B 1/04

(54) **Bicycle rim assembly with multiple easily-assembled spokes**

(71) Applicant: Kinlin Industrial Corporation, Kaohsiung Hsien (TW)
(72) Inventor: Chen, Hsueh-Chen, Kaohsiung Taiwan (CN)
(74) Representative: LOUIS, PÖHLAU, LOHRENTZ

(57) **Abstract**

A bicycle rim assembly with multiple easily-assembled spokes has a rim (10), a hub (20) and multiple spokes (30). The rim (10) has multiple fastening holes (11). The spokes (30) are mounted between the rim (10) and the hub (20). Each spoke (30) has an inner end (31) and an offset end (32). The offset end (32) has an inner bent part (321), an outer bent part (322) and a connecting part (323). The inner and outer bent parts (321, 322) are bent to opposite directions and are formed on the offset end (32). The connecting part (323) is formed between the inner and outer bent parts (321, 322). Because the inner and outer bent parts (321, 322) are bent to opposite directions, the offset end (32) is mounted securely in the fastening hole (11). Therefore, the spoke (30) is easily assembled on the rim (10).

## Description

### 1. Field of the Invention

The present invention relates to a bicycle rim assembly, especially to a bicycle rim assembly with multiple easily-assembled spokes.

### 2. Description of the Prior Arts

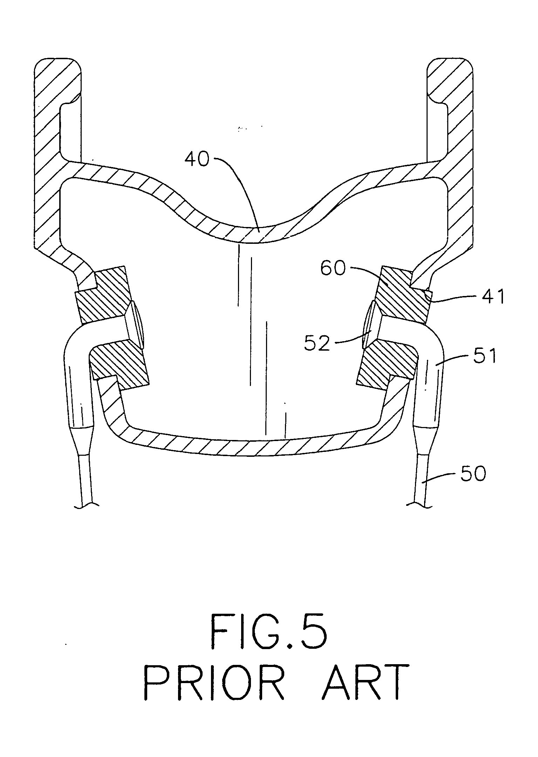

Conventional bicycles have two wheels. Each wheel comprises a tire and a rim assembly. The rim assembly comprises a rim, a hub and multiple spokes. The spokes are mounted separately between the rim and the hub to connect the rim to the hub. With reference to Fig. 5, a conventional rim assembly comprises a rim (40), a hub (not shown), multiple mounting seats (60) and multiple spokes (50). The rim (40) is hollow and has multiple fastening holes (41) formed through and evenly spaced around the rim (40). Each spoke (50) has an inner end (not shown), an outer end (51) and a head (52). The inner end of the spoke (50) is mounted securely in the hub. The outer end (51) of the spoke (50) is bent and extends into the fastening hole (41) of the rim (40). The head (52) is formed on the outer end (51) of the spoke (50). Each mounting seat (60) is mounted around the outer end (51) of the spoke (50) and is mounted the fastening hole (41) of the rim (40) to fasten the spoke (50) in the rim (40). However, the conventional structure to fasten the spoke (50) in the rim (40) requires to form the head (52) of the spoke (50), to form multiple mounting seats (60) and to mount the mounting seats (60). The conventional structure to fasten the spoke (50) in the rim (40) is too complicated and costs much money and much assembling time.

To overcome the shortcomings, the present invention provides a bicycle rim assembly with multiple easily-assembled spokes to mitigate or obviate the aforementioned problems.

The main objective of the present invention is to provide a bicycle rim assembly with multiple easily-assembled spokes. The bicycle rim assembly with multiple easily-assembled spokes has a rim, a hub and multiple spokes. The rim has multiple fastening holes. The spokes are mounted between the rim and the hub. Each spoke has an inner end and an offset end. The offset end has an inner bent part, an outer bent part and a connecting part. The inner and outer bent parts are bent to opposite directions and are formed on the offset end. The connecting part is formed between the inner and outer bent parts on the offset end. Because the inner and outer bent parts are bent to opposite directions, the offset end of the spoke is mounted securely in the fastening hole of the rim. Therefore, the spoke is easily assembled on the rim.

Other objectives, advantages and novel features of the invention will become more apparent from the following detailed description when taken in conjunction with the accompanying drawings.

### IN THE DRAWINGS

Fig. 1 is a side view of a bicycle rim assembly with multiple easily-assembled spokes in accordance with the present invention;
Fig. 2 is an enlarged side view in partial section of a spoke and a partial rim of the bicycle rim assembly Fig. 1;
Fig. 3 is an operational enlarged side view in partial section of the partial spoke and the partial rim of the bicycle rim assembly in Fig. 1;
Fig. 4 is an operational enlarged side view in partial section of the partial spoke and the partial rim of the bicycle rim assembly in Fig. 1; and
Fig. 5 is an enlarged side view in partial section of two partial spokes and a partial rim of a conventional bicycle rim assembly in accordance with the prior art.

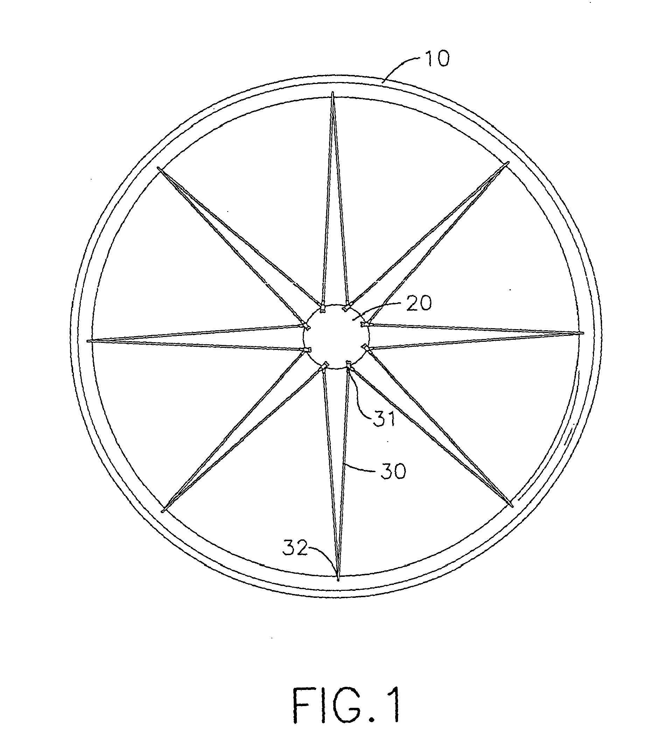

With reference to Fig. 1, a bicycle rim assembly with multiple easily-assembled spokes in accordance with the present invention comprises a rim (10), a hub (20) and multiple spokes (30).

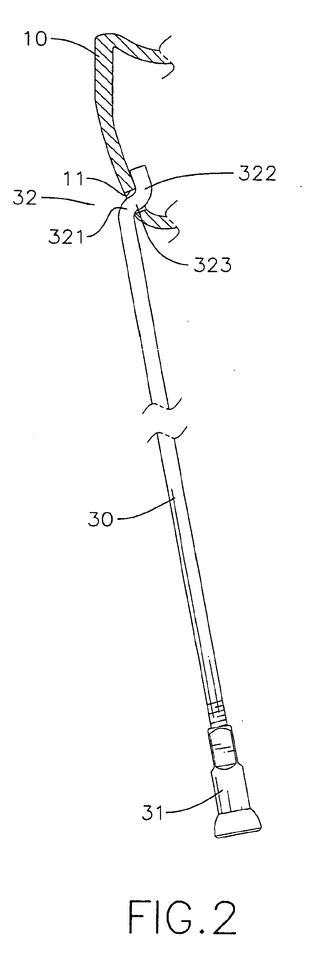

With further reference to Fig. 2, the rim (10) is hollow and has multiple fastening holes (11) formed through and evenly spaced around the rim (10).

The spokes (30) are mounted separately between the rim (10) and the hub (20) to connect the rim (10) to the hub (20). Each spoke (30) has an inner end (31) and an offset end (32). The inner end (31) of the spoke (30) is mounted securely in the hub (20). The offset end (32) of the spoke (30) is mounted securely in the fastening hole (11) of the rim (10) and has an inner bent part (321), an outer bent part (322) and a connecting part (323). The inner and outer bent parts (321, 322) are formed continually and are bent to opposite directions on the offset end (32). The inner bent part (321) is mounted outside the rim (10). The outer bent part (322) is mounted inside the rim (10). The inner and outer bent parts (321, 322) may be 90 degrees. The connecting part (323) is formed between the inner and outer bent parts (321, 322) on the offset end (32) and is mounted in the fastening hole (11) of the rim (10).

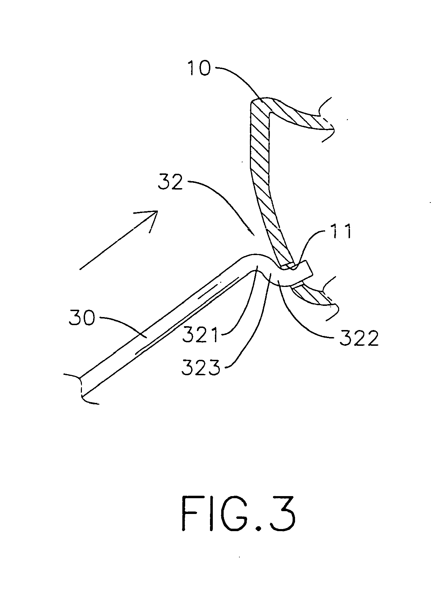

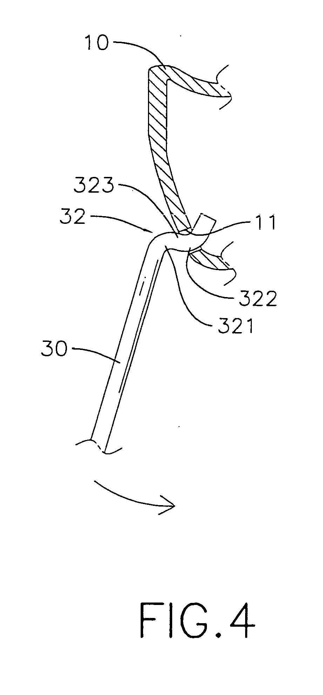

With further reference to Figs. 3 and 4, the spokes (30) are assembled into the rim (10). First, the outer bent part (322) is inserted into the fastening hole (11) of the rim (10). Then turn the spoke (30) to make the connecting part (323) be able to extend into the fastening hole (11) of the rim (10). Because the inner and outer bent parts (321, 322) are bent to opposite directions, the offset end (32) of the spoke (30) is mounted securely in the fastening hole (11) of the rim (10). Therefore, the spoke (30) is easily assembled on the rim (10).

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A bicycle rim assembly with multiple easily-assembled spokes comprising:
a rim (10) being hollow and having multiple fastening holes (11) formed through and evenly spaced around the rim (10);
a hub (20); and
multiple spokes (30) mounted separately between the rim (10) and the hub (20) to connect the rim (10) to the hub (20), and each spoke (30) having
an inner end (31) mounted securely in the hub (20); and
an offset end (32) mounted securely in the fastening hole (11) of the rim (10) and having
an inner bent part (321) formed on the offset end (32) and mounted outside the rim (10);
an outer bent part (322) formed on the offset end (32) and mounted inside the rim (10), wherein the inner and outer bent part (321, 322) are formed continually and are bent to opposite directions on the offset end (32); and
a connecting part (323) formed between the inner and outer bent parts (321, 322) on the offset end (32) and mounted in the fastening hole (11) of the rim (10).

2. The bicycle rim assembly as claimed in claim 1, wherein the outer and inner bent parts (321, 322) of the spoke (30) are 90 degrees.
